# EUROPEAN PATENT APPLICATION

(11) **EP 2 492 196 A2**
(43) Date of publication of application: **29.08.2012**
(21) Application number: 11002260.5
(22) Date of filing: 18.03.2011
(51) Int. Cl.: B64D 11/04

(54) **Fastening arrangement for fastening a storage container in a compartment of an aircraft galley, storage container and aircraft galley**

(30) Priority: 28.02.2011 US 36132
(71) Applicant: Airbus Operations GmbH, 21129 Hamburg (DE)
(72) Inventor: Tan, Joyce, Spanish Fort, 36527 Alabama (US); Henshaw, Robert, 30265, Newnan (US); Stephens, Benjamin D., 30309, Atlanta (US); Pangalila, Iwan, 21129 Hamburg (DE)
(74) Representative: Schicker, Silvia

(57) **Abstract**

A fastening arrangement (10) for fastening a storage container (12) in a compartment (13) of an aircraft galley comprises a latching mechanism (44a, 44b) for securing the storage container (12) in the compartment (13) of the aircraft galley. The latching mechanism (44a, 44b) comprises a latch (46) and a first biasing mechanism (48), the first biasing mechanism (48) being adapted to bias the latch (46) into a latched position in a first operational state of the latching mechanism (44a, 44b), such that the latch (46) is adapted to interact with the storage container (12) upon insertion of the storage container (12) into the compartment (13) of the aircraft galley so as to be moved from its latched position into an unlatched position against the biasing force applied to the latch (46) by the first biasing mechanism (48), and such that the latch (46) is adapted to be moved back into its latched position by the biasing force applied to the latch (46) by the first biasing mechanism (48) when the storage container (12) has reached a predefined position in the compartment (13) of the aircraft galley.

## Description

The invention relates to a fastening arrangement for fastening a storage container in a compartment of an aircraft galley. Further, the invention relates to a storage container which is adapted to be fastened in a compartment of an aircraft galley by such a fastening arrangement and an aircraft galley which is equipped with such a fastening arrangement.

### Background of the invention

WO 2007/096000 A1 discloses a modular aircraft galley comprising a body which is subdivided into a plurality of compartments. The compartments of the galley body are adapted to accommodate various devices such as ovens, water heaters, coffee makers and the like. Further, the compartments of the galley body serve to accommodate box-shaped storage containers filled with service products for the passengers on board the aircraft such as food or drinks. The compartments and the storage containers are designed such that each compartment can accommodate either a single storage container or a plurality of storage containers which can be arranged in the compartment one behind the other.

DE 10 2008 064 084 B4 relates to a mounting system for fastening a box in a compartment of an aircraft galley according to WO 2007/096000 A1. The mounting system comprises a latching mechanism which is adapted to secure the box against movement in the compartment of the aircraft galley in a direction parallel to the longitudinal axis of the compartment of the aircraft galley. For loading a box into the compartment of the aircraft galley and for unloading a box from the compartment of the aircraft galley the latching mechanism must be manually operated so as to move latches of the latching mechanism from a latched position into an unlatched position.

### Brief summary of the invention

The invention is directed to the object to provide a fastening arrangement for fastening a storage container in a compartment of an aircraft galley which enables a user to easily and comfortably load the storage container into the compartment of the aircraft galley. Further, the invention is directed to the object to provide a storage container which is adapted to be fastened in a compartment of an aircraft galley by such a fastening arrangement and an aircraft galley which is equipped with such a fastening arrangement.

These objects are addressed by a fastening arrangement according to claim 1, a storage box according to claim 13 and an aircraft galley according to claim 15.

A fastening arrangement according to the invention for fastening a storage container in a compartment of an aircraft galley comprises a latching mechanism for securing the storage container in the compartment of the aircraft galley. The storage container may for example be a storage container which is adapted to receive service products, such as food or drinks to be provided to the passengers on board the aircraft. The form and the shape of the storage container may be adjusted to the form and the shape of the galley compartment. In particular, the storage container may be designed such that only one storage container can be received in the galley compartment. Alternatively, the storage container may, however, also be designed such that plural containers of the same or a different size can be received in the galley compartment, wherein the containers may be disposed in the galley compartment one behind the other and/or on top of each other.

The latching mechanism preferably is adapted to secure the storage container against movement in the compartment of the aircraft galley in a direction parallel to the longitudinal axis of the compartment of the aircraft galley and comprises a latch, the latch preferably being adapted to interact with the storage container so as to secure the storage container in its position in the compartment of the aircraft galley. In dependence on the number, the size and the shape of the storage container(s) to be received in the galley compartment, the fastening arrangement may comprise only one latching mechanism or a plurality of latching mechanisms. Only one latching mechanism may be sufficient to secure only one storage container in its position in the compartment of the aircraft galley. A plurality of latching mechanisms usually is favorable if a plurality of storage containers should be secured in their positions in the galley compartment. In the latter case the number and the design of the latching mechanisms preferably is adjusted to the number and the design of the storage containers to be secured in the galley compartment.

The latching mechanism further comprises a first biasing mechanism. In a first operational state of the latching mechanism the first biasing mechanism is adapted to bias the latch of the latching mechanism into a latched position. The latch then is adapted to interact with the storage container upon insertion of the storage container into the compartment of the aircraft galley so as to be moved from its latched position into an unlatched position against the biasing force applied to the latch by the first biasing mechanism and to be moved back into its latched position by the biasing force applied to the latch by the first biasing mechanism when the storage container has reached a predefined position in the compartment of the aircraft galley. In other words, the latch of the latching mechanism upon insertion of the storage container into the galley compartment is pushed aside against the biasing force applied to the latch by the first biasing mechanism due to the interaction of the latch with the storage container such that the storage container can be inserted into the galley compartment without being obstructed by the latch. When, however, the storage container has reached its desired position in the compartment of the aircraft galley, the first biasing mechanism urges the latch back into its latched position such that the storage container is automatically secured in its position in the galley compartment.

The fastening arrangement according to the invention allows to dispense with the need to manually move a latch of a latching mechanism for securing a storage container in a compartment of an aircraft galley into an unlatched position so as to be able to load the storage container into the galley compartment. As a result, the loading of the storage container into the galley compartment is considerably simplified. Further, since the latch, due to the biasing force applied to the latch by the first biasing means, is automatically urged into its latched position as soon as the storage container has reached its desired position in the compartment of the aircraft galley, a faulty operation of the fastening arrangement by a user is not possible. Consequently, the storage container is reliably secured in its position in the galley compartment independent of a manual operation of the fastening arrangement by a user.

In the first operational state of the latching mechanism the first biasing mechanism preferably is connected to the latch of the latching mechanism. If desired, the connection between the first biasing mechanism and the latch of the latching mechanism may be a releasable connection so that the first biasing mechanism may be disconnected from the latch of the latching mechanism when the latching mechanism is not operated in its first operational state. When the first biasing mechanism is released from the latch of the latching mechanism, the first biasing mechanism no longer applies a biasing force to the latch which urges the latch into its latched position. For example, the first biasing mechanism may comprises a tension spring which in the first operational state of the latching mechanism is releasably connected to a spring fastening element of the latch. A releasable connection between the first biasing mechanism and the latch of the latching mechanism allows to dispense with the need to continuously counteract the biasing force of the first biasing mechanism when the latching mechanism is operated in an operational state where it not desired to urge the latch into its latched position.

The fastening arrangement according to the invention may further comprise an actuation mechanism which in an actuated state is adapted to interact with the latch of the latching mechanism so as to secure the latch in its unlatched position in a second operational state of the latching mechanism. For example, the actuation mechanism and/or the latch of the latching mechanism may be movably supported on a supporting component of the fastening mechanism, wherein the supporting component of the fastening mechanism, which supports the actuation mechanism and/or the latch of the latching mechanism, preferably is designed in the form of a housing which is adapted to at least partially accommodate the actuation mechanism and/or the latch of the latching mechanism. The actuation mechanism may be slidably supported on the supporting component of the fastening mechanism, whereas the latch of the latching mechanism may be pivotably supported on the supporting component of the fastening mechanism.

Preferably, the latch of the latching mechanism, in the second operational state of the latching mechanism, is released from the first biasing mechanism, thus avoiding the need for the actuation mechanism to counteract the biasing force applied to the latch by the first biasing mechanism in the first operational state of the latching mechanism. When the latch of the latching mechanism, due to the interaction with the actuation mechanism, is secured in its unlatched position, the storage container can easily be unloaded from the compartment of the aircraft galley. The actuation mechanism preferably is designed so as to be manually operable by a user. For example, the actuation mechanism may comprise an actuation button which may be provided at a position in or close to the galley compartment which is easily accessible for a user. Such an embodiment of the actuation mechanism is particularly comfortable to operate.

In a preferred embodiment the fastening arrangement further comprises a second biasing mechanism which is adapted to bias the actuation mechanism into a non-actuated state in the first operational state of the latching mechanism. Consequently, to actuate the actuation mechanism so as to change the operational state of the latching mechanism, an actuation force counteracting the biasing force applied to the actuation mechanism by the second biasing mechanism has to be applied to the actuation mechanism. The actuation force which is necessary to actuate the actuation mechanism can be tailored as desired by appropriately designing the second biasing mechanism, i.e. by appropriately dimensioning the biasing force applied to the actuation mechanism by the second biasing mechanism. The second biasing mechanism may comprise a spring, for example a compression spring. A first end of the spring may be supported on a first spring supporting member provided on the supporting component of the fastening mechanism, whereas a second end of the spring may be supported on a second spring supporting member provided on a body of the actuation mechanism. The biasing force applied to the actuation mechanism by the spring then allows to move the actuation mechanism from its actuated state into its non-actuated state relative to the supporting component of the fastening mechanism and relative to the latch of the latching mechanism.

The actuation mechanism may comprise a latch engaging member which is adapted to engage with the latch of the latching mechanism so as to move the latch from its latched position into its unlatched position upon actuation of the actuation mechanism. Further, the latch engaging member may be adapted to engage with the latch of the latching mechanism so as to maintain the latch in its unlatched position in the actuated state of the actuation mechanism. For example, the latch engaging member may comprise an elongate element protruding from the body of the actuation mechanism and being adapted to be received in a corresponding recess formed in the latch of the latching mechanism upon actuation of the actuation mechanism. When the actuation mechanism is moved from its non-actuated state into its actuated state, the elongate element may interact with a sidewall of the recess formed in the latch, thus urging the latch to pivot from its latched position into its unlatched position. As long as the actuation mechanism is actuated, the elongate element, by interacting with the sidewall of the recess formed in the latch, may maintain the latch in its unlatched position. The latch engaging member may further comprise a receiving element formed in the body of the actuation mechanism adjacent to the elongate element and being adapted to receive a portion of the latch upon actuation of the actuation mechanism, i.e. when the actuation mechanism is moved from its non-actuated state into its actuated state and the latch, due to the interaction with the elongate element, is pivoted from its latched position into its unlatched position.

The latch engaging member may further be adapted to engage with the latch of the latching mechanism so as to release the latch from the first biasing mechanism upon actuation of the actuation mechanism. In addition, the latch engaging member may be adapted to engage with the latch of the latching mechanism so as to maintain the latch of the latching mechanism released from the first biasing mechanism in the actuated state of the actuation mechanism. For example, the latch engaging member may be adapted to interact with the latch upon actuation of the actuation mechanism so as to move the latch in a direction substantially perpendicular to a pivot axis of the latch and to thus disconnect the latch from the first biasing mechanism. In particular, the elongate element of the latch engaging member may engage with a sidewall portion of the recess formed in the latch when the actuation mechanism is moved from its non-actuated state into its actuated state, thus urging the latch so as to move substantially perpendicular to its pivot axis. Due to the movement of the latch, a spring fastening element of the latch may disengage from a tension spring of the first biasing mechanism. As long as the actuation mechanism is actuated, the elongate element, for example by interacting with the sidewall portion of the recess formed in the latch, may maintain the latch disengaged from the first biasing mechanism.

Preferably, the fastening arrangement further comprises a locking member which is adapted to lock the actuation mechanism in its actuated state. When the actuation mechanism is provided with a locking member, the unloading of a storage containers from the compartment of the aircraft galley is particularly comfortable for a user, since the user simply has to actuate the actuation mechanism, for example by pressing an actuation button of the actuation mechanism, so as to release the storage container received in the compartment of the aircraft galley from the latching mechanism and to thus be able to unload the storage containers from the galley compartment.

The locking member may comprise a first retaining element which may be connected to the actuation mechanism. A second retaining element of the locking member may be connected to or formed integral with the supporting component supporting the actuation mechanism. In such a configuration the first retaining element, together with the actuation mechanism, is movable relative to the supporting component supporting the actuation mechanism and thus the second retaining element. The first retaining element and the second retaining element preferably are adapted to engage with each other when the actuation mechanism in its actuated state so as to lock the actuation mechanism in its actuated state. For example the first retaining element may comprise an elongate bar, a first end of which may be pivotably connected to the body of the actuation mechanism. A second end of the elongate bar of the first retaining element may be provided with a retaining pin extending from a surface of the elongate bar. The second retaining element may comprise a hook portion adapted to receive the retaining pin of the first retaining element so as to lock the actuation mechanism in its actuated state.

In a preferred embodiment of the fastening arrangement according to the invention the actuation mechanism is movable between a first position, a second position and a third position. The actuation mechanism preferably is in its non-actuated state when it is disposed in its first position and in its actuated state when it is disposed in its third position. The locking member may be adapted to lock the actuation mechanism in its third position. The second position may be a kind of intermediate position into which the actuation mechanism may be brought upon moving the actuation mechanism between its first position and its third position.

Preferably the actuation mechanism is movable from its first position into its second position by moving the actuation mechanism in a first direction. For example the actuation mechanism may be moved from its first position into its second position by pushing an actuation button of the actuation mechanism which is connected to or formed integral with the body of the actuation mechanism. Further, the actuation mechanism preferably is movable from its second position into its third position by moving the actuation mechanism in a second direction opposite to the first direction. Thus, the actuation mechanism may also be moved from its third position into its second position by pushing an actuation button of the actuation mechanism which is connected to or formed integral with the body of the actuation mechanism. Further, if the fastening arrangement according to the invention, as discussed above, is equipped with a second biasing mechanism adapted to bias the actuation mechanism into its non-actuated state, i.e. into its first position, the actuation mechanism, due to the biasing force of the second biasing mechanism, is automatically urged from its second position into its third position when a user releases the actuation button of the actuation mechanism after having pushed the actuation button so as to move the actuation mechanism from its first position into its second position.

The fastening arrangement further may comprise a guiding element which is adapted to guide the movement of the actuation mechanism either from its first position into its third position or from its third position into its first position when the actuation mechanism is moved into its second position. In other words, when the actuation mechanism is moved from its first position into its second position, the guiding element serves to guide the actuation mechanism into its third position where it is locked by means of the locking member. When, however, the actuation mechanism is moved from its third position into its second position, the guiding element serves to unlock the locking member and to guide the actuation mechanism into its first position. Thus, if the fastening arrangement according to the invention, as discussed above, is equipped with a second biasing mechanism adapted to bias the actuation mechanism into its non-actuated state, the actuation mechanism, due to the biasing force of the second biasing mechanism, is not only automatically urged from its second position into its third position when a user releases the actuation button of the actuation mechanism after having pushed the actuation button so as to move the actuation mechanism from its first position into its second position, but also automatically urged from its second position into its first position when a user releases the actuation button of the actuation mechanism after having pushed the actuation button so as to move the actuation mechanism from its third position into its second position.

In particular, the guiding element may be adapted to interact with the first retaining element of the locking member so as to guide the first retaining element into engagement with the second retaining element of the locking member when the actuation mechanism is moved from its first position into its second position, and so as to guide the first retaining element to disengage from the second retaining element when the actuation mechanism is moved from its third position into its second position. The guiding element may be connected to or formed integral with the supporting component supporting the actuation mechanism.

A storage container according to the invention, which is adapted to be fastened in a compartment of an aircraft galley, comprises a holding element which is adapted to interact with the latch of the latching mechanism of the above described inventive fastening arrangement in the first operational state of the latching mechanism, such that the latch upon insertion of the storage container into the compartment of the aircraft galley is moved from its latched position into its unlatched position against the biasing force applied to the latch by the biasing mechanism, and such that the latch is moved back into its latched position by the biasing force applied to the latch by the biasing mechanism when the storage container has reached a predefined position in the compartment of the aircraft galley and to latch with the holding element of the storage container so as to secure the storage container in the compartment of the aircraft galley.

The holding element of the storage container, in dependence on the position of the fastening arrangement and in particular in dependence on the position of the latch of the latching mechanism relative to the compartment of the aircraft galley may be attached to an outer surface of a base plate, a top plate or a side wall of the storage container. A holding element attached to an outer surface of a base plate of the storage container is adapted to interact with a latch disposed in the region of an inner surface of a base plate of the galley compartment. A holding element attached to an outer surface of a top plate of the storage container is adapted to interact with a latch disposed in the region of an inner surface of a base plate of the galley compartment or a latch disposed in a plane extending substantially parallel to a base plate of the galley compartment. A holding element attached to an outer surface of a side wall of the storage container is adapted to interact with a latch disposed in the region of an inner surface of a side wall of the galley compartment.

An aircraft galley according to the invention comprises a body having at least one compartment for accommodating a storage container and an above described inventive fastening arrangement.

### Brief description of the drawings

Preferred embodiments of the invention now are described with reference to the following schematic drawings, wherein,
- Fig. 1: shows a three dimensional view of a fastening arrangement for fastening a storage container in a compartment of an aircraft galley,
- Fig. 2: shows a detailed view of the fastening arrangement according to Fig. 1,
- Fig. 3: shows a three dimensional view of the fastening arrangement according to Fig. 1, wherein an extractor of the fastening arrangement for extracting a storage container from a compartment of an aircraft galley is shown in an extracted state,
- Fig. 4: shows a detailed view of the extractor of the fastening arrangement according to Fig. 3,
- Fig. 5: shows a three dimensional view of a bottom side of the fastening arrangement according to Fig. 1,
- Fig. 6: shows the three dimensional view of a bottom side of the fastening arrangement according to Fig. 5, wherein, however a cover of a housing of the fastening arrangement has been omitted,
- Fig. 7: shows the mounting of the fastening arrangement according to Fig. 1 in a compartment of an aircraft galley,
- Fig. 8: shows the fastening arrangement according to Fig. 1, wherein the fastening arrangement is mounted in a compartment of an aircraft galley,
- Fig. 9: shows a detailed view of a latching mechanism and an actuation mechanism of the fastening arrangement according to Fig. 1, wherein the latching mechanism is in a first operational state, and wherein the actuation mechanism is disposed in a first position,
- Fig. 10: shows a detailed view of the latching mechanism and the actuation mechanism according to Fig. 9, wherein the latching mechanism is in a second operational state, and wherein the actuation mechanism is disposed in a second position after being moved from the first position into the second position,
- Fig. 11: shows a detailed view of the latching mechanism and the actuation mechanism according to Fig. 9, wherein the latching mechanism is in a second operational state, and wherein the actuation mechanism is disposed in a third position,
- Fig. 12: shows a detailed view of the latching mechanism and the actuation mechanism according to Fig. 9, wherein the latching mechanism is in a second operational state, and wherein the actuation mechanism is disposed in a second position after being moved from the third position into the second position,
- Fig. 13: shows a detailed view of the latching mechanism and the actuation mechanism according to Fig. 9 upon interacting with a holding element of a storage container so as to move a latch of the latching mechanism from a latched position into an unlatched position in the first operational state of the latching mechanism,
- Fig. 14: shows a detailed view of the latching mechanism and the actuation mechanism according to Fig. 13, wherein the latch of the latching mechanism interacts with the holding element of the storage container so as to secure the storage container in its position in the first operational state of the latching mechanism,
- Fig. 15: shows two compartments of an aircraft galley, wherein a storage container is secured in each of the two galley compartments by means of a fastening arrangement according to Fig. 1,
- Fig. 16: shows a detailed view of the latching mechanism and the actuation mechanism according to Fig. 13, wherein the latching mechanism is its second operational state so as to allow the storage container to be released from the fastening arrangement,
- Fig. 17: shows a further embodiment of a fastening arrangement for fastening a storage container in a compartment of an aircraft galley, wherein the fastening arrangement is mounted in the region of a sidewall of the galley compartment,
- Fig. 18: shows a detailed view of a latching mechanism and an actuation mechanism of the fastening arrangement according to Fig. 17, wherein the latching mechanism is in a first operational state, and wherein the actuation mechanism is disposed in a first position,
- Fig. 19: shows a detailed view of the latching mechanism and the actuation mechanism according to Fig. 18, wherein the latching mechanism is in a second operational state, and wherein the actuation mechanism is disposed in a third position.

### Detailed description of preferred embodiments

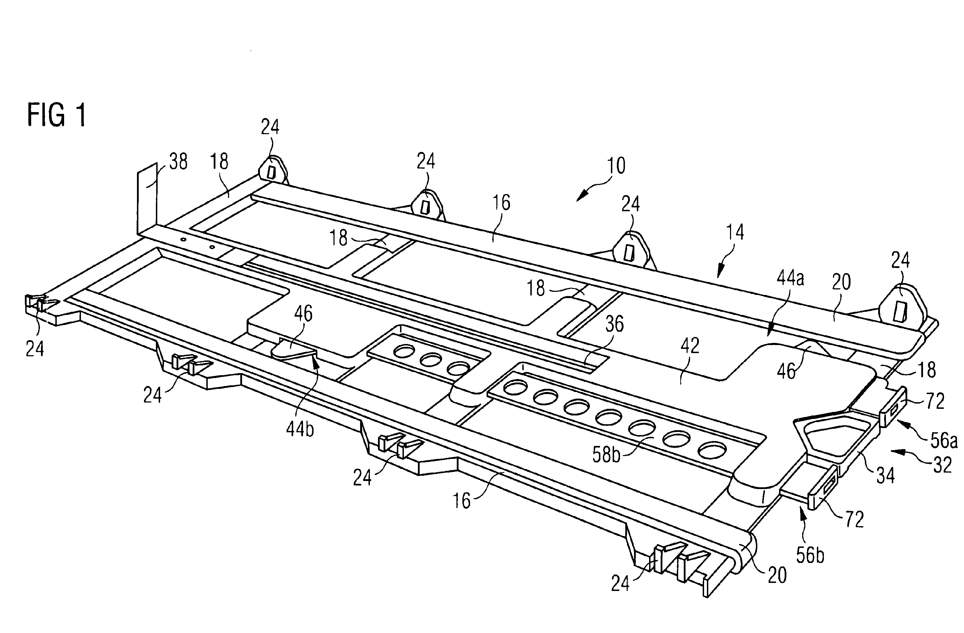

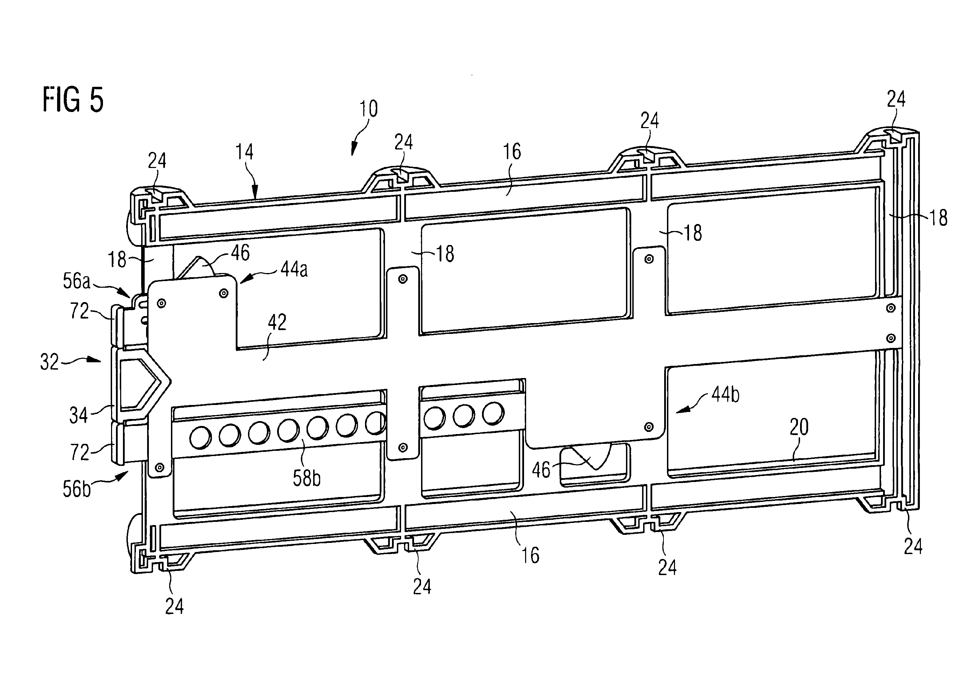

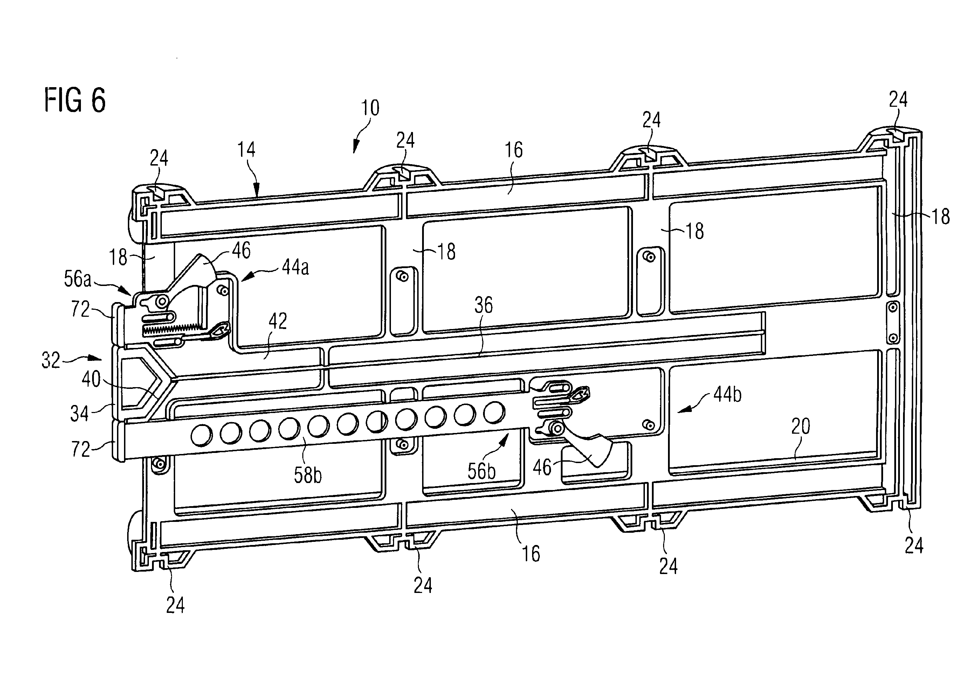

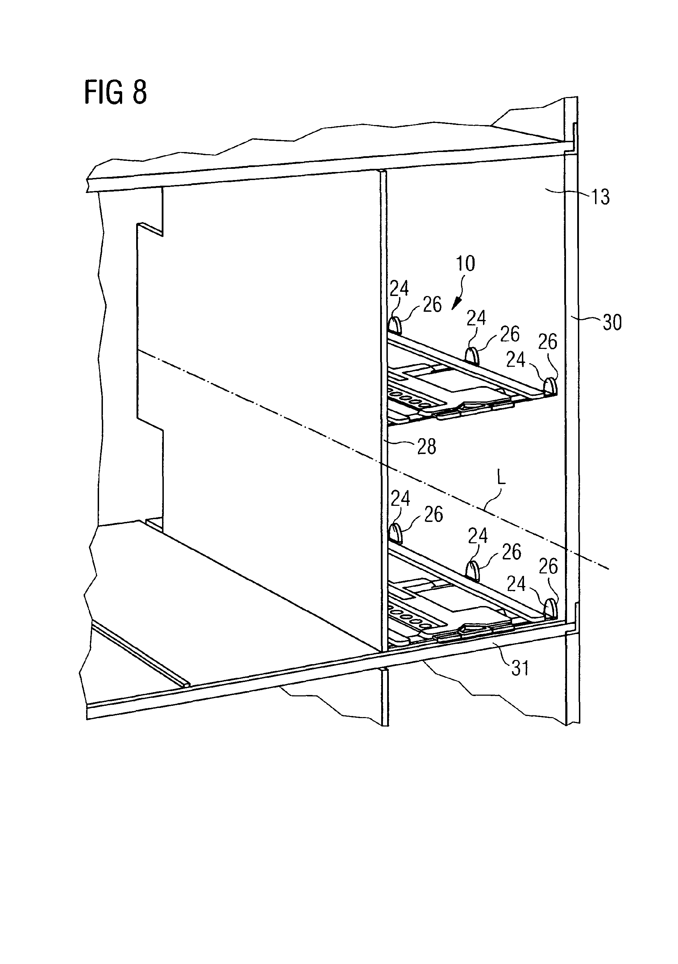

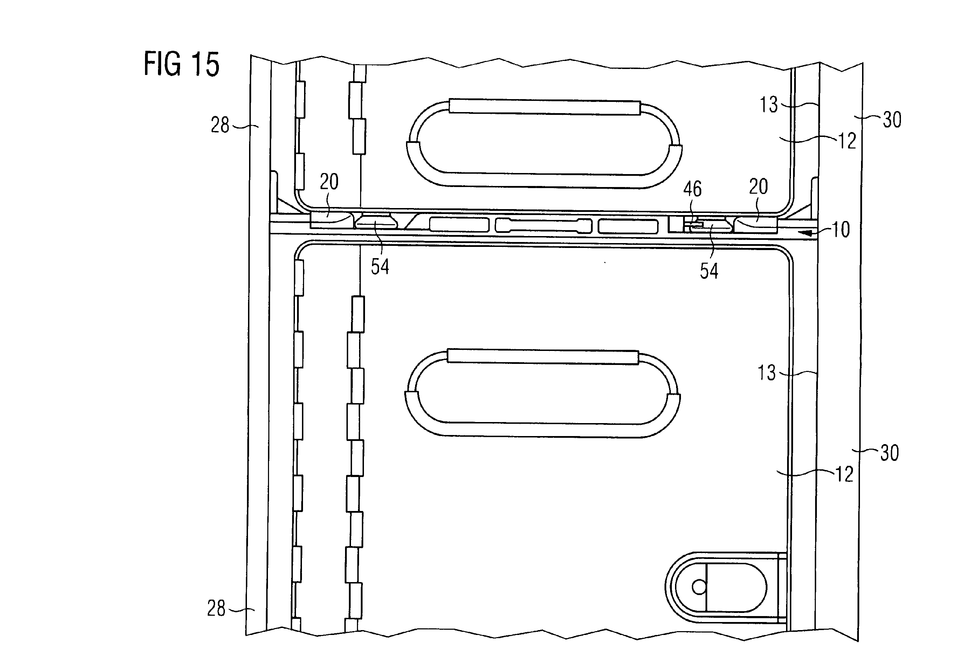

Figs. 1 to 16 show a first embodiment of a fastening arrangement 10 for fastening a storage container 12 in a compartment 13 of an aircraft galley. The fastening arrangement 10 comprises a frame 14 having a substantially rectangular shape and including two parallel longitudinal struts 16. The longitudinal struts 16 of the frame 14 are connected to each other by four parallel transverse struts 18 extending substantially perpendicular to the longitudinal struts 16. When the fastening arrangement 10 is mounted in the galley compartment 13 (see Fig. 8) the longitudinal struts 16 of the frame 14 extend substantially parallel to a longitudinal axis L of the galley compartment 13, whereas the transverse struts 18 of the frame 14 extend substantially perpendicular to the longitudinal axis L of the galley compartment 13.

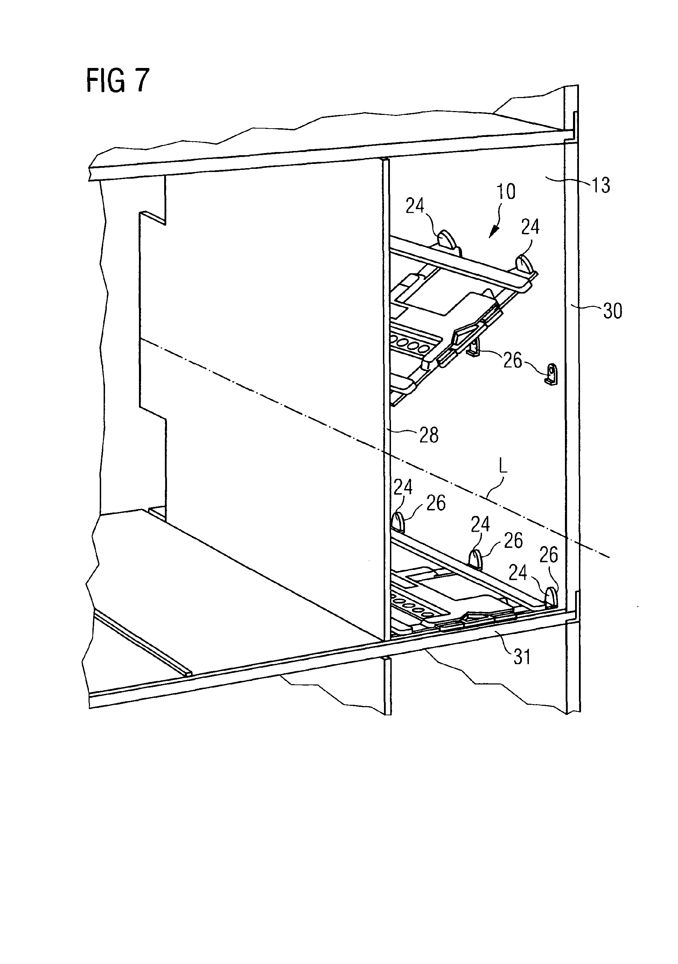

The frame 14 of the fastening arrangement 10 carries two parallel guiding struts 20 extending substantially parallel to the longitudinal struts 16 of the frame 14. The guiding struts 20 are adapted to interact with corresponding guiding means provided on an outer surface of a bottom plate 22 of the storage container 12 so as to guide a movement of the storage container 12 upon insertion of the storage container 12 into the galley compartment 13. Further, attachment elements 24 are formed integral with the longitudinal struts 16 of the frame 14 which are adapted for interacting with corresponding attachment elements 26 which are fastened to inner surfaces of opposing side walls 28, 30 of the galley compartment 13 so as to secure the fastening arrangement 10 in the galley compartment 13 (see Figs. 7 and 8). The attachment elements 24, 26 allow the fastening arrangement 10 to be mounted in the galley compartment 13 without being supported on a base plate 31 of the galley compartment 13, thus allowing plural fastening arrangements 10 to be mounted in the galley compartment 13 on top of each other.

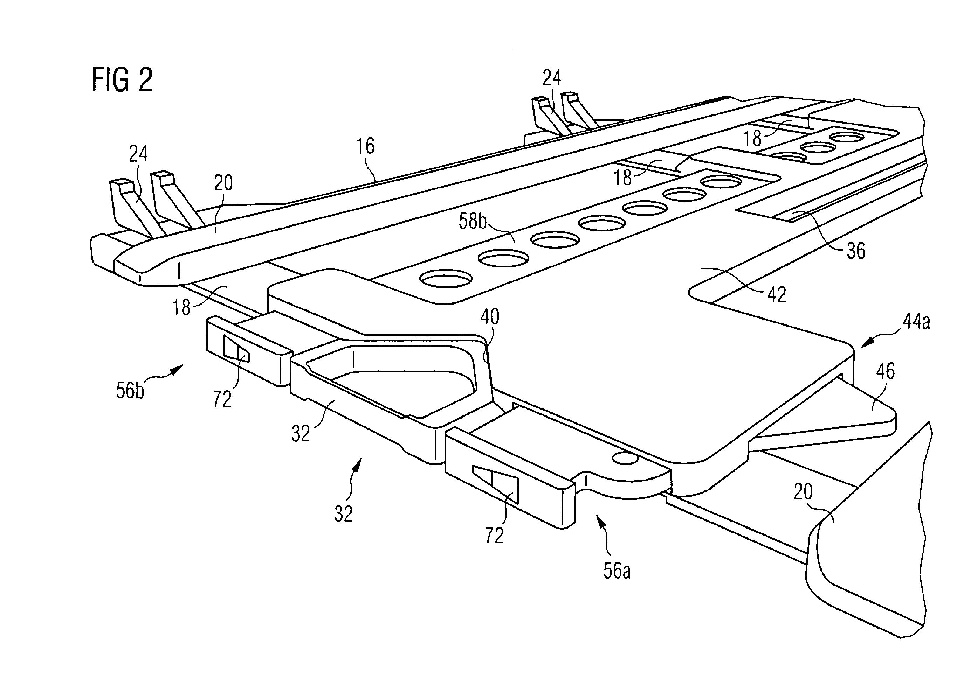

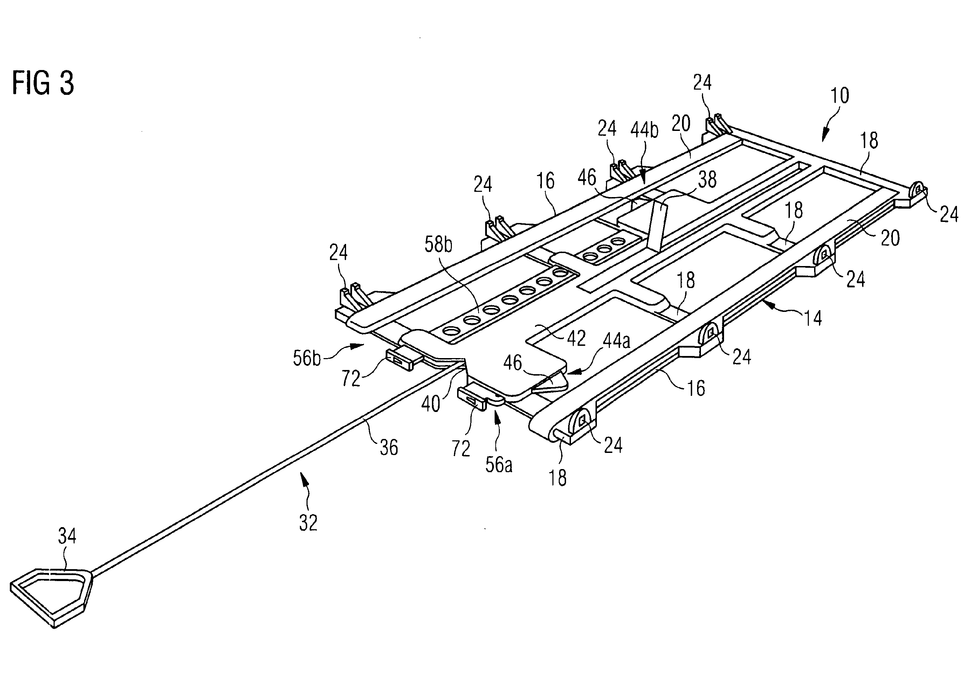

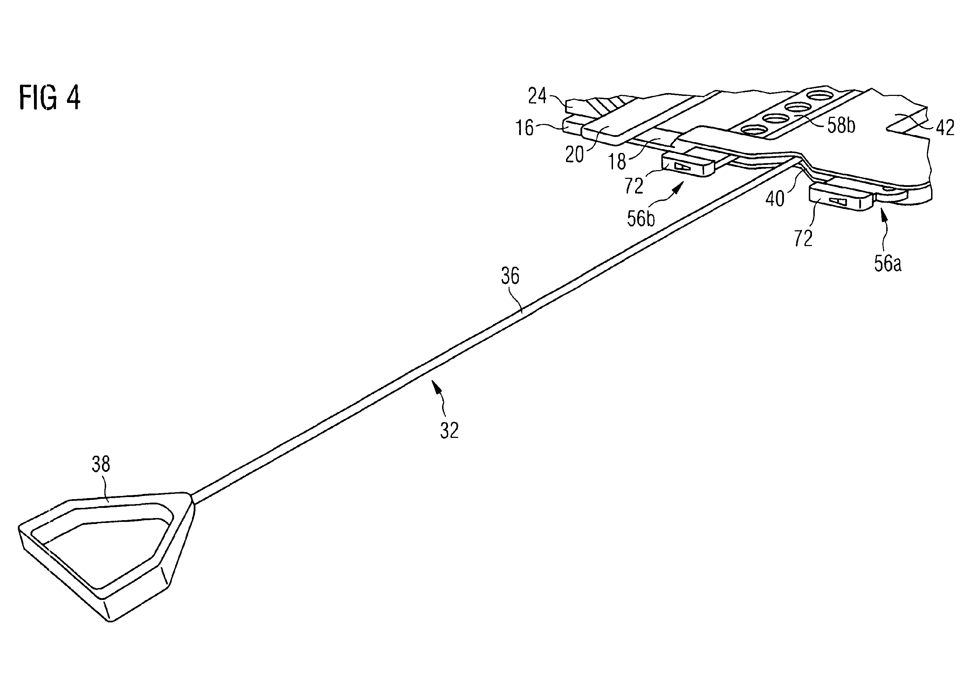

The fastening arrangement 10 further comprises an extractor 32 including a handle 34 which, via a connecting element 36, is connected to an abutment member 38 extending substantially perpendicular to a plane defined by the frame 14 of the fastening arrangement 10. As becomes apparent from Figs. 3 and 4, the extractor 32, by pulling the handle 34, can be moved relative to the frame 14 of the fastening arrangement 10. The abutment member 38 of the extractor 32, upon moving the extractor 32 relative to the frame 14 of the fastening arrangement 10 by pulling the extractor handle 34, is adapted to interact with a rear wall of the storage container 12 so as to enable the storage container 12 to be withdrawn from the galley compartment 13. As becomes apparent in particular from Figs. 2 and 4, the extractor handle 34 and a handle receiving portion 40 provided on a housing 42 attached to the frame 14 of the fastening arrangement 10 are provided with tapered surfaces so as to align the extractor handle 34 when the extractor 32 is moved back from its extracted position shown in Fig. 3 and 4 into its non-extracted position according to, for example, Fig. 2.

As an alternative, the extractor 32 could also be equipped with an aligning system using magnets for guiding the handle 38 into a desired position. For example one or two magnets could be attached to the handle 38. Preferably, one magnet is attached to the handle 38 on each side of the connecting element 36. Further, one or two magnets could be embedded in the handle receiving portion 40 of the housing 42 at corresponding positions. The magnets in the handle 38 and the handle receiving portion 40 could be positioned such that opposing magnetic poles face each other. As a result, the magnetic force generated due to the interaction of the magnets urges the handle 38 into the desired horizontal position.

The fastening arrangement 10 further is provided with a first and a second latching mechanism 44a, 44b. The first latching mechanism 44a serves to secure a storage container 12 in a front portion of the galley compartment 13, whereas the second latching mechanism 44b serves to secure the same or a further storage container 12 in a rear portion of the galley compartment 13. By means of the fastening arrangement 10 thus either only one storage container 12 or two storage containers 12 can be secured in the galley compartment 13, wherein, when two storage containers 12 should be secured in the galley compartment 13, the storage containers 12 are disposed in the galley compartment 13 one behind the other.

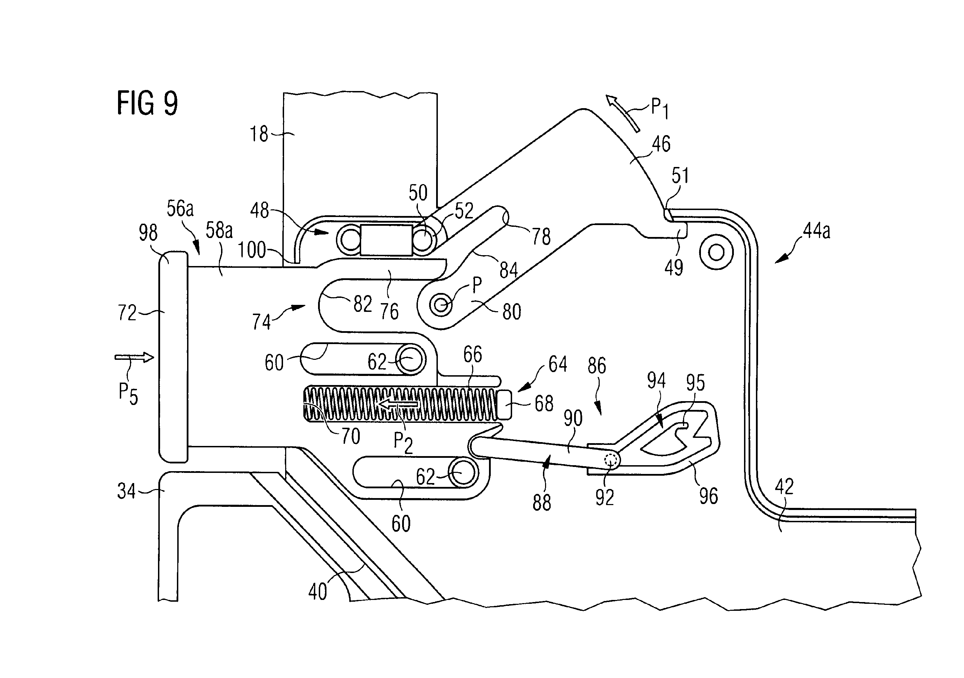

Each latching mechanism 44a, 44b comprises a latch 46 which is pivotably attached to the housing 42 and thus is pivotable around a pivot axis P between a latched position and an unlatched position. In a first operational state of the latching mechanism 44a, 44b the latch 46, by means of a first biasing mechanism 48, is biased into its latched position in the direction of an arrow P₁ (see Fig. 9). A stop element 49 formed on the latch 46, which interacts with the housing 42, i.e. an edge of the housing 42 surrounding an opening 51 formed in the housing 42, so as to allow the latch 46 to extend from the housing 42 in its latched position, defines the latched position of the latch 46 and prevents the latch 46 from being pivoted in an uncontrolled manner by the biasing force applied to the latch 46 by the first biasing mechanism 48. In the first operational state of the latching mechanisms 44a, 44b the latch 46 is releasably connected to the first biasing mechanism 48. In particular, a spring fastening element 50 extending from a surface of the latch 46 is connected to a tension spring 52 of the first biasing mechanism 48.

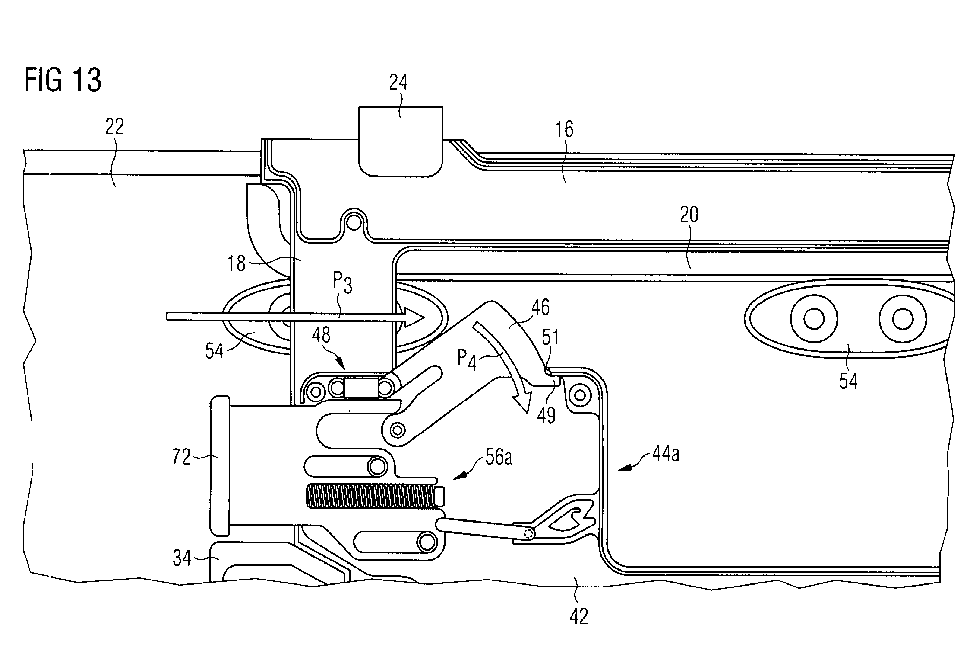

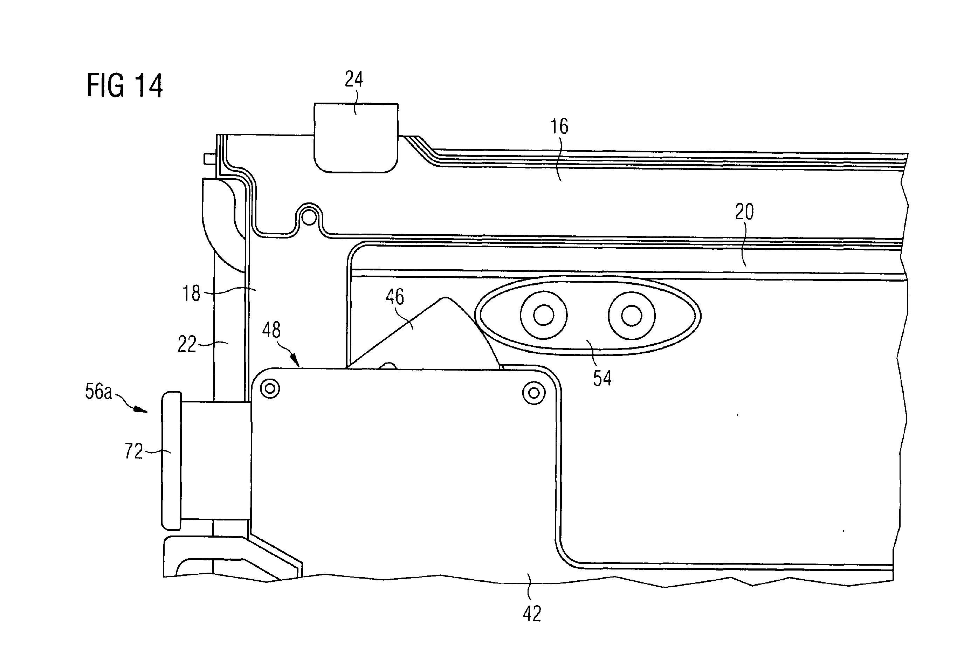

As becomes apparent from Figs. 13 and 14, in the first operational state of the latching mechanisms 44a, 44b, the latch 46 is adapted to interact with a holding element 54 attached to the outer surface of the bottom plate 22 of the storage container 12 upon insertion of the storage container 12 into the galley compartment 13 in the direction of an arrow P₃, such that the latch 46, in the direction of an arrow P₄, is pivoted from its latched position into an unlatched position against the biasing force applied to the latch 46 by the first biasing mechanism 48. When the storage container 12 has reached a desired position relative to the fastening arrangement 10 in the galley compartment 13 (see Fig. 14) the latch 46, due to the biasing force applied to the latch 46 by the first biasing mechanism 48, is pivoted back around the pivot axis P into its latched position, wherein it interacts with the holding element 54 of the storage container 12 so as to secure the storage container 12 in its position relative to the fastening arrangement 10 in the galley compartment 13.

The fastening arrangement 10 further comprises a first and a second actuation mechanism 56a, 56b, wherein the first actuation mechanism 56a is associated to the first latching mechanism 44a and the second actuation mechanism 56b is associated to the second latching mechanism 44b. The design of the actuation mechanisms 56a, 56b differs to take account of the latching mechanisms 44a, 44b being disposed in a front and a rear section of the fastening arrangement 10, respectively. In particular, a body 58a of the first actuation mechanism 56a has a shorter extension along the longitudinal struts 16 of the fastening arrangement 10 than a body 58b of the second actuation mechanism 56b. Otherwise, the design and the function of the second actuation mechanism 56b are identical to the design and the function of the first actuation mechanism 56a which will be discussed in detail in the following with reference to Fig. 9 to 12.

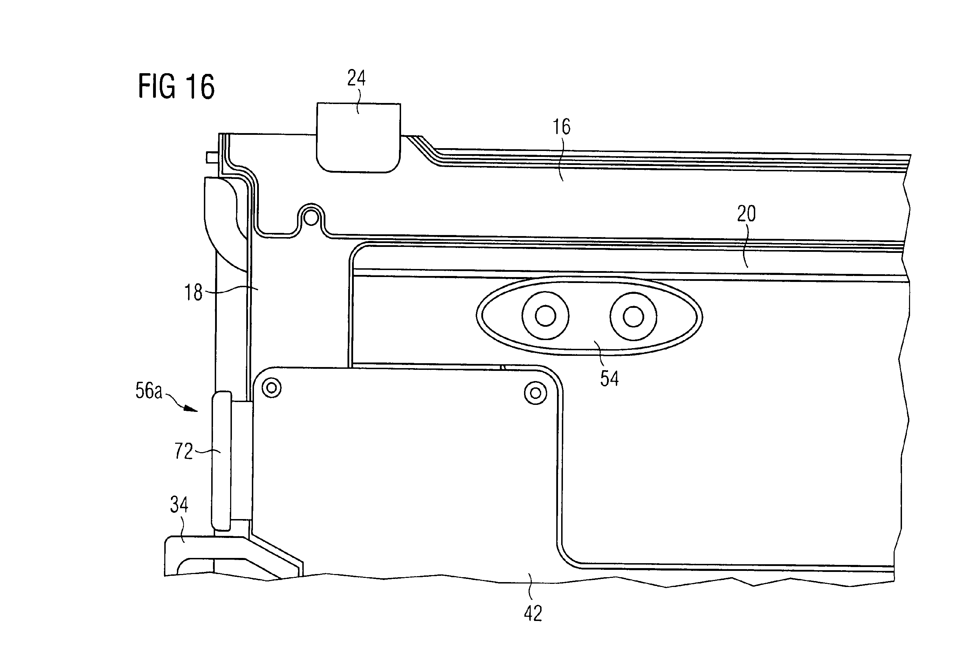

As shown in Fig. 9 to 12, the actuation mechanism 56a serves to switch the operational state of the latching mechanism 44a between a first operational state, wherein the latch 46, by means of the first biasing mechanism 48 is biased into its latched position, and a second operational state, wherein the latch 46 is secured in its unlatched position and disconnected from the first biasing mechanism 48. When the latch 46, due to the interaction with the actuation mechanism 56a, is secured in its unlatched position, the storage container 12 can be released from fastening arrangement 10 and unloaded from the galley compartment 13 (see Fig. 16).

The actuation mechanism 56a is slidably supported on the housing 42 of the fastening arrangement 10. In particular, the body 58a of the actuation mechanism 56a is provided with two elongated openings 60, each receiving a fastening pin 62 provided on the housing 42. By the interaction of the elongated openings 60 with the fastening pins 62 a sliding movement of the actuation mechanism 56a relative to the housing 42 and also the latch 46 is guided in a direction extending substantially parallel to the longitudinal struts 16 of the frame 14 of the fastening arrangement 10. By means of a second biasing mechanism 64 the actuation mechanism 56a is biased into a non-actuated state (see Fig. 9) in the direction of an arrow P₂, wherein the actuation mechanism 56a does not interfere with the latch 46 of the latching mechanism 44a so that the latching mechanism 44a is in its first operational state, wherein the latch 46, by the first biasing mechanism 48, is biased into its latched position. The second biasing mechanism 64 comprises a compression spring 66, a first end of which is supported on a first spring supporting member 68 provided on the housing 42. A second end of the compression spring 66 is supported on a second spring supporting member 70 provided on the body 58a of the actuation mechanism 56a.

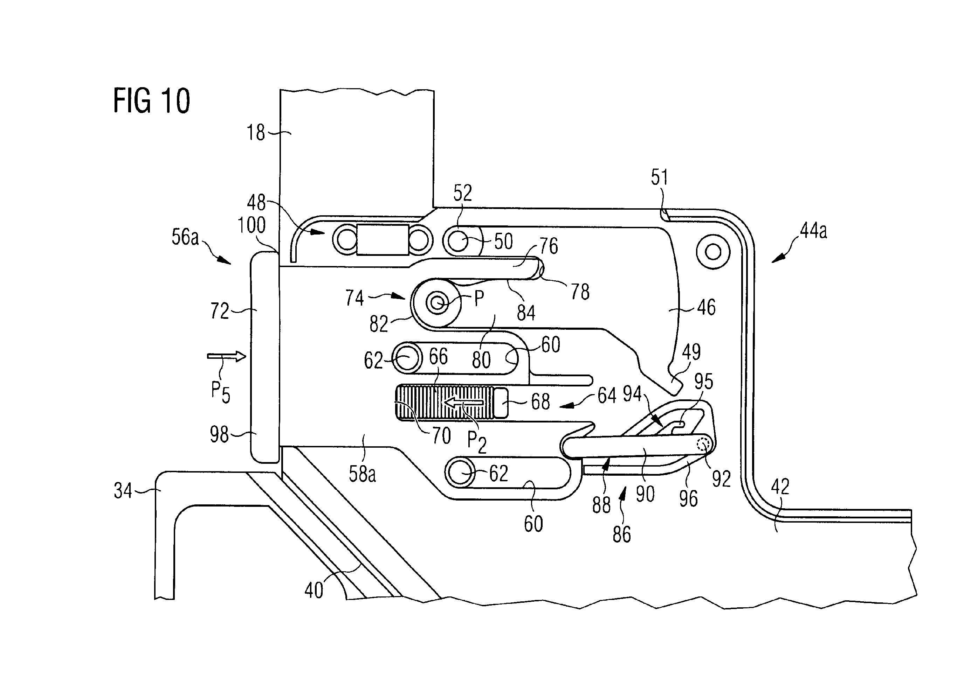

The actuation mechanism 56a further comprises a manually operable actuation button 72. By pushing the actuation button 72 in the direction of an arrow P₅ a user may move the actuation mechanism 56a from its non-actuated state depicted in Fig. 9 against the biasing force of the second biasing mechanism 64 relative to the housing 42 and the latch 46. When the actuation mechanism 56a is actuated, i. e. the actuation button 72 of the actuation mechanism 56a is pushed, a latch engaging member 74 of the actuation mechanism 56a engages with the latch 46 of the latching mechanism 44a so as to move the latch 46 from its latched position into its unlatched position. In particular, the latch engaging member 74 comprises an elongate element 76 protruding from the body 58a of the actuation mechanism 56a. Upon actuation of the actuation mechanism 56a, the elongate element 56 interacts with a side wall of a recess 78 formed in the latch 46, thus urging the latch 46 to pivot from its latched position into its unlatched position. When the elongate element 76 of the latch engaging member 74 is received in the recess 78 formed in the latch 46, a portion 80 of the latch 46 adjacent to the recess 78 is received in a receiving element 82 of the latch engaging member 74 which is formed in the body 58a of the actuation mechanism 56a.As long as the actuation mechanism 56a is actuated as shown in Fig. 10, the elongate element 76, by interacting with the side wall of the recess 78 formed in the latch 46, maintains the latch 46 in its unlatched position.

The latch engaging member 74, upon actuation of the actuation mechanism 56a, further engages with the latch 46 of the latching mechanism 44a so as to release the latch 46 from the first biasing mechanism 48 and so as to maintain the latch 46 released from the first biasing mechanism 48. Specifically, the elongate element 76 of the latch engaging member 74 engages with a side wall portion 84 of the recess 78 formed in the latch 46 so as to urge the latch 46 to move substantially perpendicular to the pivot axis P, i. e. in Figs. 9 to 12 downwards. Due to the movement of the latch 46, the spring fastening element 50 of the latch 46 disengages from the tension spring 52 of the first biasing mechanism 48. Consequently, the first biasing mechanism 48 no longer applies a biasing force to the latch 46 (see Fig. 10).

The fastening arrangement 10 further comprises a locking member 86 which serves to lock the actuation mechanism 56a in its actuated state. The locking member 86 comprises a first retaining element 88 including an elongate bar 90, a first end of which is pivotably connected to the body 58a of the actuation mechanism 56a. A second end of the elongate bar 90 is provided with a retaining pin 92 extending from a surface of the elongate bar 90 (in Figs. 9 to 12 downwards). A second retaining element 94 of the locking member 86 is formed integral with the housing 42 and comprises a hook portion 95 adapted to receive the retaining pin 92 of the first retaining element 88. Finally, a guiding element 96 is provided on the housing 42. The guiding element 96 serves to guide the first retaining element 88 of the locking member 86 during its movement when the actuation mechanism 56a is actuated and the first retaining element 88 is moved together with the body 58a of the actuation mechanism 56a.

In the following, the function of the actuation mechanism 56a will be discussed. Fig. 9 shows the actuation mechanism 56a in its non-actuated state, wherein the actuation mechanism 56a, relative to the housing 42 and the latch 46, is disposed in a first position. In its first position, the actuation mechanism 56a does not interfere with the latch 46 of the latching mechanism 44a. As a result, the latch 46 is biased into its latched position by the first biasing mechanism 48. When the actuation mechanism 56a, as shown in Fig. 10, is actuated by a user by pushing the actuation button 72 in the direction of the arrow P₅, the actuation mechanism 56a is moved relative to the housing 42 and the latch 46 into a second position against the biasing force of the second biasing mechanism 64. When the actuation mechanism 56a is disposed in its second position, an edge region 98 of the actuation button 72 abuts against an outer surface of the housing 42 in an edge region of the housing 42 surrounding an opening 100 formed in the housing 42 so as to allow the actuation button 72 to protrude from the housing 42, thus preventing the actuation mechanism 56a to be pushed any further.

When the actuation mechanism 56a is actuated, the latch engaging member 74 interacts with the latch 46 of the latching mechanism 44a so as to pivot the latch 46a from its latched position in its unlatched position and to disengage the latch 46 from the first biasing mechanism 48 as described above. Further, the first retaining element 88 of the locking member 86 is guided into a position wherein the first retaining element 88 is ready for engagement with the second retaining element 94. When the actuation mechanism 56a is in its second position, the first retaining element 88, however, still does not interact with the second retaining element 94. Hence, to keep the actuation mechanism 56a in its second position as shown in Fig. 10, the user has to continuously apply a pushing force onto the actuation button 72 of the actuation mechanism 56a.

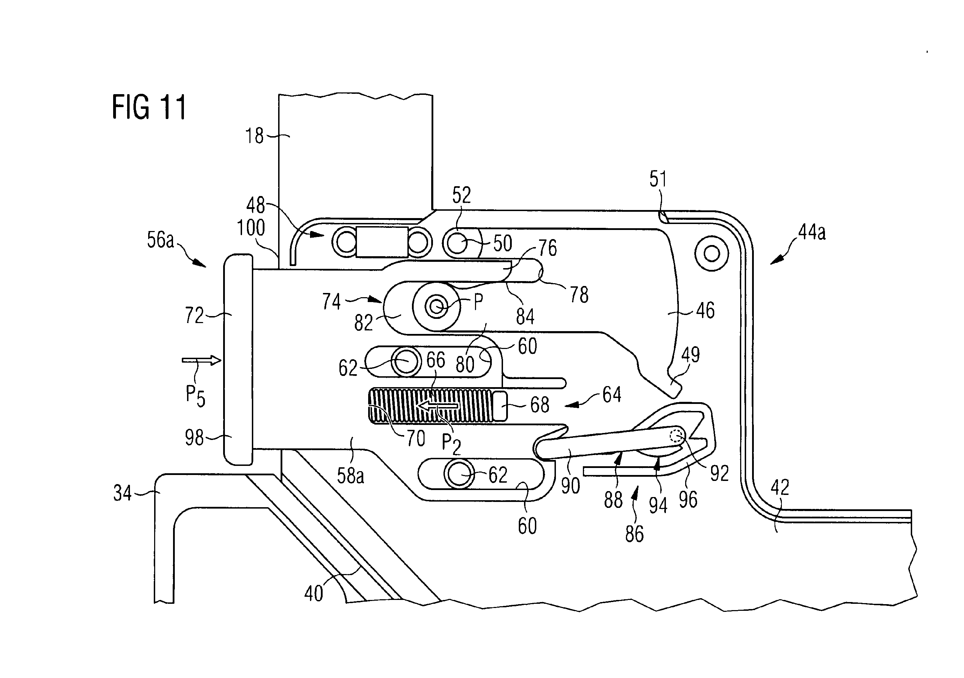

When the user releases the actuation button 72, the actuation mechanism 56a, due to the biasing force of the second biasing mechanism 64, is moved in the direction of the arrow P₂ into its first position. During this movement of the actuation mechanism 56a the guiding element 96 guides the first retaining element 88 of the locking member 86 into engagement with the second retaining element 94. In particular, the retaining pin 92 of the first retaining element 88 is guided into engagement with the hook portion 95 of the second retaining element 94. When the first retaining element 88 and the second retaining element 94 are engaged with each other, the actuation mechanism 56a is locked in a third position shown in Fig. 11. In its third position, the actuation mechanism 56a is locked in an actuated state, wherein the actuation mechanism 56a secures the latch 46 of the latching mechanism 44a in its unlatched position and hence maintains the latching mechanism 44a in a second operational state. In its second operational state the latching mechanism 44a is no longer operable, i. e., the latch 46 no longer is biased into its latched position. Instead, the latch 46 is disconnected from the first biasing mechanism 48.

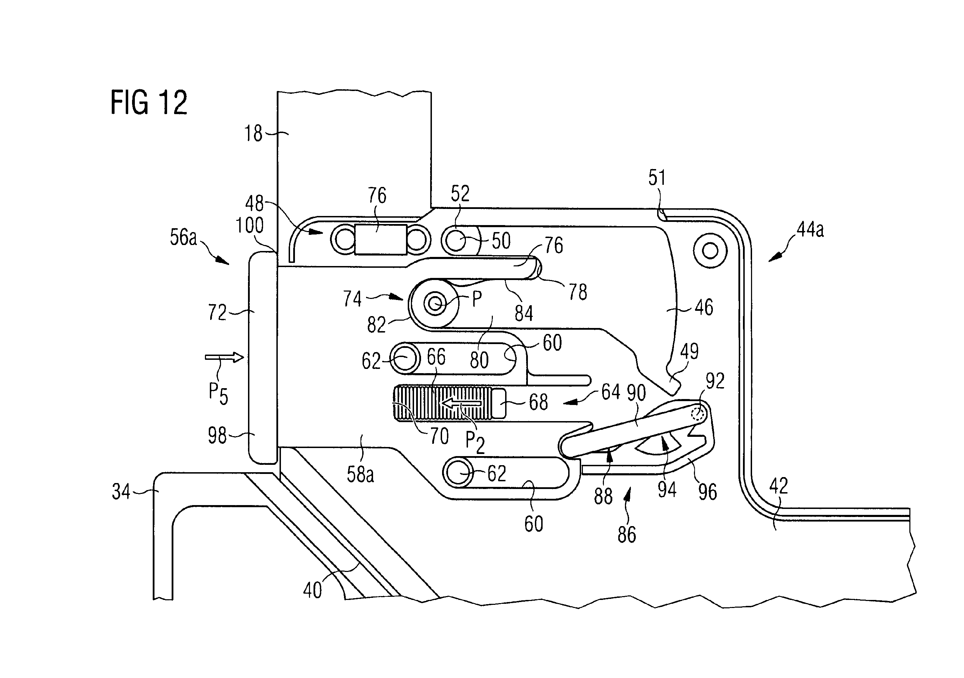

When the actuation mechanism 56a is in its third position, the edge region 98 of the actuation button 72 is disposed at a distance from the edge region of the housing 42 surrounding the opening 100. Hence, the actuation mechanism 56a again can be actuated by pushing the actuation button 72 in the direction of the arrow P₅, thus moving the actuation mechanism 56a back into its second position. Then, however, since the actuation mechanism 56a is moved into its second position from its third position, as shown in Fig. 12, the guiding element 96 guides the first retaining element 88 of the locking member 86 out of engagement with the second retaining element 94. As a result, when a user releases the actuation button 72, the actuation mechanism 56a, due to the biasing force of the second biasing mechanism 64 is moved back into its first position shown in Fig. 9. The actuation mechanism 56a thus is provided in the form of a push-push mechanism which is easily operable by a user.

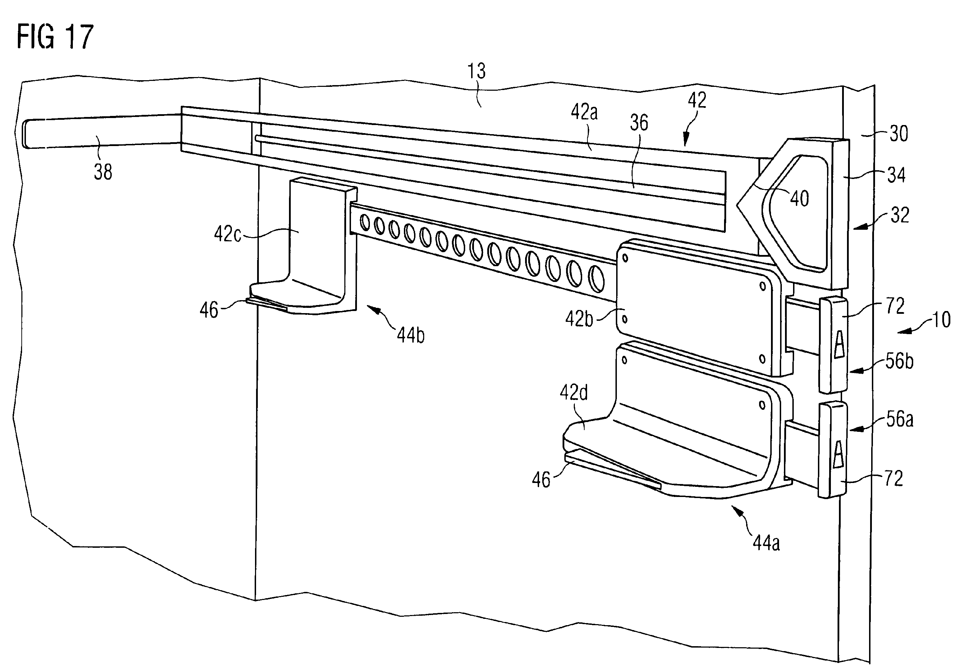

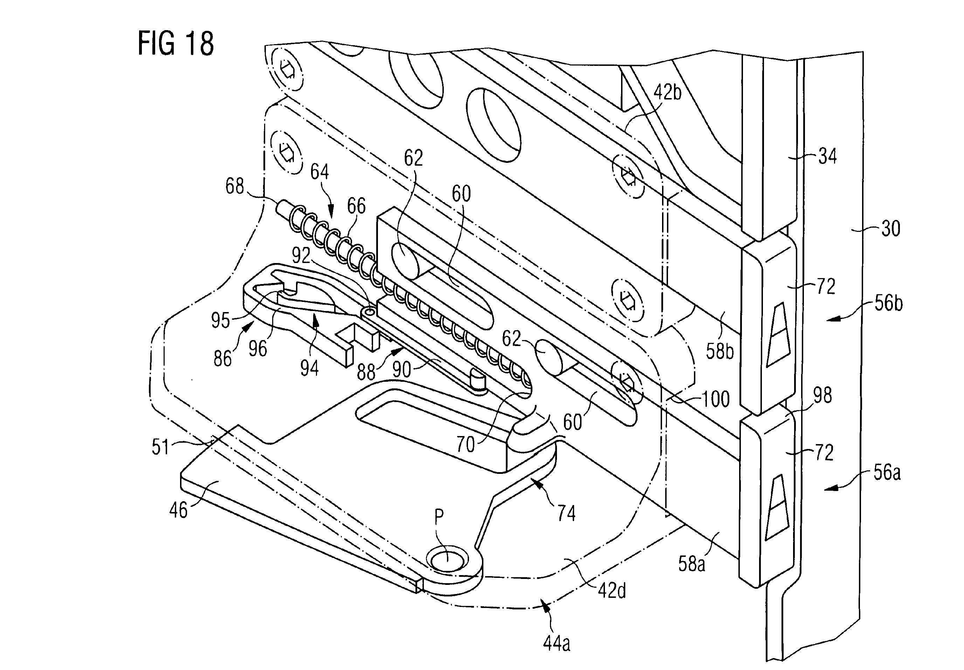

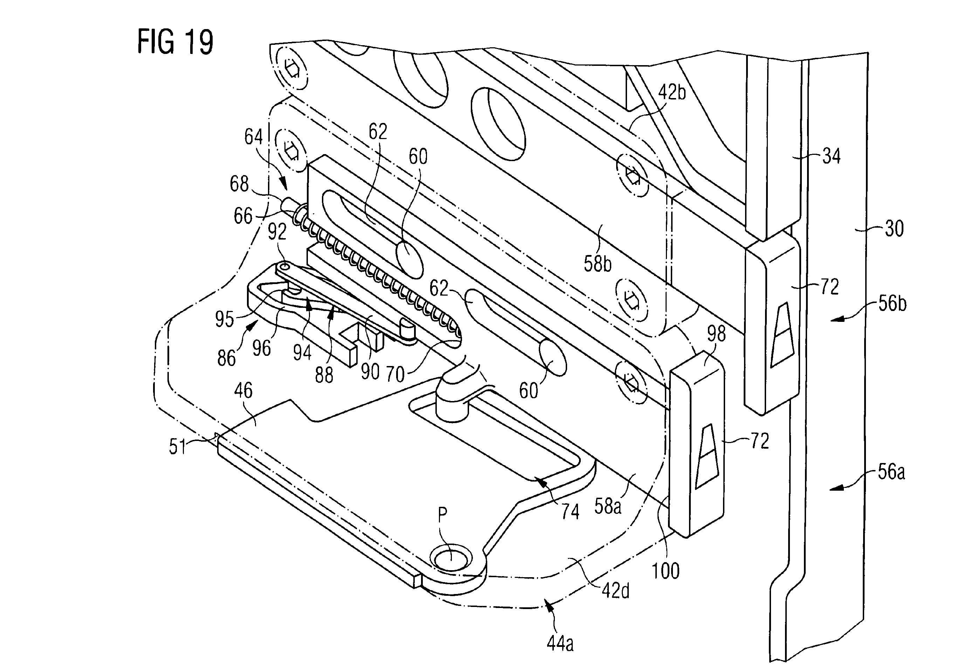

Figs. 17 to 19 show a second embodiment of a fastening arrangement 10 which, contrary to the arrangement according to Figs. 1 to 16, is attached to a side wall 30 of a galley compartment 13. The fastening arrangement 10 according to Figs. 17 to 19 no longer comprises a frame, but simply an extractor 32, first and second latching mechanisms 44a, 44b, and first and second actuation mechanisms 56a, 56b. The shape of the latch 46 of the latching mechanisms 44a, 44b, the shape of the latch engaging member 74 and the shape of the housing 42 are adapted to the arrangement of the fastening arrangement 10 on a side wall 30 of a galley compartment 13. In particular, the housing 42 now comprises housing portions 42a, 42b, 42c and 42d which are formed separate from each other. Otherwise, the function of the fastening arrangement 10 according to Figs. 17 to 19, however, is identical to the function of the arrangement shown in Figs. 1 to 16.

## Claims

1. A fastening arrangement (10) for fastening a storage container (12) in a compartment (13) of an aircraft galley, the fastening arrangement (10) comprising a latching mechanism (44a, 44b) for securing the storage container (12) in the compartment (13) of the aircraft galley,
**characterized in that** the latching mechanism (44a, 44b) comprises a latch (46) and a first biasing mechanism (48), the first biasing mechanism (48) being adapted to bias the latch (46) into a latched position in a first operational state of the latching mechanism (44a, 44b), such that the latch (46) is adapted to interact with the storage container (12) upon insertion of the storage container (12) into the compartment (13) of the aircraft galley so as to be moved from its latched position into an unlatched position against the biasing force applied to the latch (46) by the first biasing mechanism (48), and such that the latch (46) is adapted to be moved back into its latched position by the biasing force applied to the latch (46) by the first biasing mechanism (48) when the storage container (12) has reached a predefined position in the compartment (13) of the aircraft galley.

2. The fastening arrangement according to claim 1,
**characterized in that** in the first operational state of the latching mechanism (44a, 44b) the first biasing mechanism (48) is releasably connected to the latch (46) of the latching mechanism (44a, 44b), wherein the first biasing mechanism (48) in particular comprises a tension spring (52) which in the first operational state of the latching mechanism (44a, 44b) is releasably connected to a spring fastening element (50) of the latch (46).

3. The fastening arrangement according to claim 1 or 2,
**characterized in that** the fastening arrangement (10) further comprises an actuation mechanism (56a, 56b), the actuation mechanism (56a, 56b) in an actuated state being adapted to interact with the latch (46) of the latching mechanism (44a, 44b) so as to secure the latch (46) in its unlatched position in a second operational state of the latching mechanism (44a, 44b).

4. The fastening arrangement according to claim 3,
**characterized in that** the fastening arrangement (10) further comprises a second biasing mechanism (64), the second biasing mechanism (64) being adapted to bias the actuation mechanism (56a, 56b) into a non-actuated state in the first operational state of the latching mechanism (44a, 44b).

5. The fastening arrangement according to claim 3 or 4,
**characterized in that** the actuation mechanism (56a, 56b) comprises a latch engaging member (74), the latch engaging member (74) being adapted to engage with the latch (46) of the latching mechanism (44a, 44b) so as to move the latch (46) from its latched position into its unlatched position upon actuation of the actuation mechanism (56a, 56b), and to maintain the latch (46) in its unlatched position in the actuated state of the actuation mechanism (56a, 56b).

6. The fastening arrangement according to claim 5,
**characterized in that** the latch engaging member (74) further is adapted to engage with the latch (46) of the latching mechanism (44a, 44b) so as to release the latch (46) from the first biasing mechanism (48) upon actuation of the actuation mechanism (56a, 56b), and to maintain the latch (46) released from the first biasing mechanism (48) in the actuated state of the actuation mechanism (56a, 56b).

7. The fastening arrangement according to any one of claims 3 to 6, **characterized in that** the fastening arrangement (10) further comprises a locking member (86), the locking member (86) being adapted to lock the actuation mechanism (56a, 56b) in its actuated state.

8. The fastening arrangement according to claim 7,
**characterized in that** locking member (86) comprises a first retaining element (88) being connected to the actuation mechanism (56a, 56b) and a second retaining element (94) being connected to a supporting component (42) supporting the actuation mechanism (56a, 56b), the first retaining element (88) and the second retaining element (94) being adapted to engage with each other when the actuation mechanism (56a, 56b) in its actuated state so as to lock the actuation mechanism (56a, 56b) in its actuated state.

9. The fastening arrangement according to any one of claims 3 to 8, **characterized in that** the actuation mechanism (56a, 56b) is movable between a first position, a second position and a third position, wherein the actuation mechanism (56a, 56b) is in its non-actuated state when it is disposed in its first position, and wherein the locking member (86) is adapted to lock the actuation mechanism (56a, 56b) in its third position.

10. The fastening arrangement according to claim 9,
**characterized in that** the actuation mechanism (56a, 56b) is movable from its first position into its second position by moving the actuation mechanism (56a, 56b) in a first direction (P₅), and that the actuation mechanism (56a, 56b) is movable from its second position into its third position by moving the actuation mechanism (56a, 56b) in a second direction (P₂) opposite to the first direction (P₅).

11. The fastening arrangement according to claim 9 or 10,
**characterized in that** the fastening arrangement (10) further comprises a guiding element (96) which is adapted to guide the movement of the actuation mechanism (56a, 56b) either from its first position into its third position or from its third position into its first position when the actuation mechanism (56a, 56b) is moved into its second position.

12. The fastening arrangement according to claim 11,
**characterized in that** the guiding element (96) is adapted to interact with the first retaining element (88) of the locking member (86) so as to guide the first retaining element (88) into engagement with the second retaining element (94) of the locking member (86) when the actuation mechanism (56a, 56b) is moved from its first position into its second position, and so as to guide the first retaining element (88) to disengage from the second retaining element (94) when the actuation mechanism (56a, 56b) is moved from its third position into its second position.

13. A storage container (12) which is adapted to be fastened in a compartment (13) of an aircraft galley,
**characterized in that** the storage container (12) comprises a holding element (54) which is adapted to interact with the latch (46) of the latching mechanism (44a, 44b) of the fastening arrangement (10) according to any one of claims 1 to 12 in the first operational state of the latching mechanism (44a, 44b), such that the latch (46) upon insertion of the storage container (12) into the compartment (13) of the aircraft galley is moved from its latched position into its unlatched position against the biasing force applied to the latch (46) by the biasing mechanism (48), and such that the latch (46) is moved back into its latched position by the biasing force applied to the latch (46) by the biasing mechanism (48) when the storage container (12) has reached a predefined position in the compartment (13) of the aircraft galley and to latch with the holding element (54) of the storage container (12) so as to secure the storage container (12) in the compartment (13) of the aircraft galley.

14. The storage container according to claim 13,
**characterized in that** the holding element (54) is attached to an outer surface of a base plate (22), a top plate or a side wall of the storage container (12).

15. An aircraft galley comprising:
- a body having at least one compartment (13) for accommodating a storage container (12), and
- a fastening arrangement (10) according to any one of claims 1 to 12.
